# EUROPEAN PATENT APPLICATION

(11) **EP 1 650 537 A1**
(43) Date of publication of application: **26.04.2006**
(21) Application number: 05023259.4
(22) Date of filing: 25.10.2005
(51) Int. Cl.: G01J 3/28

(54) **A photodetector**

(30) Priority: 25.10.2004 GB 0423581
(71) Applicant: Andor Technology Plc, Springvale Business Park Belfast BT12 7AL (GB)
(72) Inventor: Hamilton, Stephen, County Antrim BT39 0TN (GB)
(74) Representative: Wallace, Alan Hutchinson

(57) **Abstract**

A photodetector of non-uniform thickness, preferably tapered in transverse cross section, or wedge-shaped. By matching the thickness of some or all regions of the photodetector to the wavelength of the optical signals that are incident on the respective regions during use, such that photons are absorbed (and electrons are created) at or adjacent the reverse face, the depth of photoelectrical material through which created electrons must travel before reaching the reverse face is reduced or minimised. This has the effect of improving the Quantum Efficiency (QE) of the photodetector.

## Description

### FIELD OF THE INVENTION

The present invention relates to photodetectors, especially but not exclusively photodetectors for use in an image intensifier of an optical spectrometer.

### BACKGROUND TO THE INVENTION

Optical spectrometers may comprise an optical spectrograph, an image intensifier and a detector, commonly comprising a CCD (Charge Coupled Device) camera. The optical spectrograph typically includes one or more prisms and/or one or more diffraction gratings which separate an incoming optical signal into its component parts according to wavelength. Hence, each component part, or order, comprises an optical signal in a respective frequency band. The function of the image intensifier is to intensify the separated optical signal produced by the spectrograph to facilitate the operation of the detector.

The image intensifier normally includes, or is associated with, a photodetector that converts optical signals into electrical or electronic signals, The efficiency with which a conventional photodetector can create an electrical output signal from an optical input signal depends partly on the thickness of the photodetector and on the wavelength(s) of the incident optical signal. As a result, conventional photodetectors may be relatively efficient when detecting optical signals in some frequency bands, but not in others.

It would be desirable to provide a more versatile photodetector.

### SUMMARY OF THE INVENTION

Accordingly, a first aspect of the invention provides a photodetector comprising a layer of photoelectric material having an obverse face, upon which photons are incident during use, and a reverse face, from which electrons emanate during use, wherein the thickness of the layer between the obverse face and the reverse face is non-uniform.

The term "non-uniform" is intended to mean deliberate or purposeful variations in layer thickness beyond any insignificant non-uniformities that may arise as a result of manufacturing imperfections.

Layer thickness, as measured in a first direction, may vary across the length and/or the width of the photodetector, the length and width being mutually perpendicular and being substantially perpendicular with said first direction. Typically, the first direction is an axial direction that is substantially or generally perpendicular with the plane in which the photodetector lies. The first direction may be substantially perpendicular with one or other of said obverse or reverse faces, usually, the obverse face.

In a preferred embodiment, layer thickness varies at a substantially constant rate. This advantageously results in a photodetector that is generally wedge-shaped, or tapered in transverse cross section.

Alternatively, layer thickness may vary at a non-constant rate, This may result in the obverse face and/or the reverse face being curved or stepped in transverse cross section. In one embodiment, layer thickness varies substantially exponentially.

In preferred embodiments, the respective thickness of a respective section or region of said layer corresponds with, or is determined by, the wavelength of optical signals which, in use, are incident on said layer at said respective section or region. For example, the thickness of the photocathode may vary across its length or width in order to suit the different wavelengths of optical signals that impinge upon the photodetector at different locations during use, Preferably, the respective thickness of a respective section, or region, of said layer is such that at least some of the photons of optical signals which, in use, are incident on said layer at said respective section, are absorbed by said layer at or adjacent said reverse face.

By matching the thickness of some or all regions of the layer to the wavelength of the optical signals that are incident on the respective regions during use, such that photons are absorbed (and electrons are created) at or adjacent the reverse face, the depth of photoelectrical material through which created electrons must travel before reaching the reverse face is reduced or minimised. This has the effect of improving, and preferably optimising the Quantum Efficiency (QE) of the photodetector.

A second aspect of the invention provides an image intensifier including the photodetector of the first aspect of the invention. When incorporated in an image intensifier, the thickness of the photodetector may vary across the width or diameter of the intensifier.

A third aspect of the invention provides an optical spectrometer, or optical spectrograph, including the photodetector of the first aspect of the invention. When included in an optical spectrometer or optical spectrograph, the photodetector is advantageously arranged such that respective components or orders of an optical signal are incident, in use, upon the obverse face of the photodetector at a respective section or region of the photodetector having a thickness that is suited to the wavelength of the respective component or order.

The preferred photodetector improves, and preferably is arranged to optimise, the QE (Quantum Efficiency) of the photodetector for incident radiation of different wavelengths, where QE is a measure of the efficiency with which the photodetector emits electrons with respect to incident photons.

In preferred embodiments, the photodetector serves as a cathode and may therefore be said to be, or to comprise, a photocathode

Further advantageous aspects of the invention will become apparent to those ordinarily skilled in the art upon review of the following description of a specific embodiment and with reference to the accompanying drawings, in which:

### BRIEF DESCRIPTION OF THE DRAWINGS

Figure 1 presents a schematic view of an image intensifier;
Figure 2 shows a conventional photodetector with an optical window;
Figure 3 shows a perspective view of a photodetector embodying the invention; and
Figure 4 shows the relative efficiencies of two conventional photodetectors of different thicknesses.

### DETAILED DESCRIPTION OF THE DRAWINGS

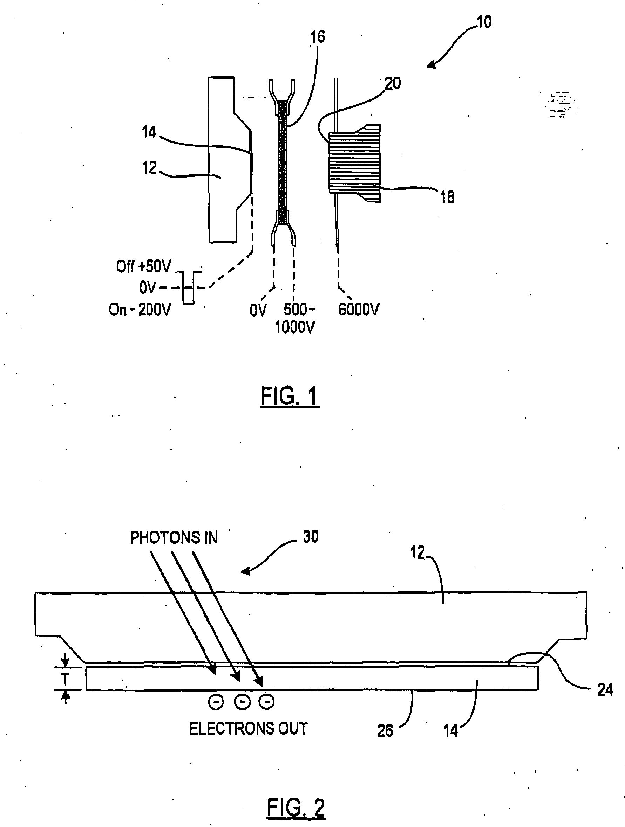

Referring now to Figure 1 of the drawings, there is shown, generally indicated as 10, an example of a typical image intensifier. The image intensifier 10 normally includes an optical window 12 through which incoming optical signals (not shown) are received. A photodetector 14 is located adjacent (usually contiguous with) the window 12 such that substantially all of the incoming photons are incident on the photodetector 14. The photodetector 14 produces an electrical signal, i.e. a signal comprised of electrons, wherein the quantity of electrons produced depends not only on the quantity of photons incident on the photodetector 14, but also on the wavelength of the incoming optical signal(s), the Quantum Efficiency (QE) of the photodetector 14 and on the thickness of the photodetector 14.

The image intensifier 10 also includes means for amplifying, or intensifying, the electrical signal produced by the photodetector 14. Typically, the amplifying means is provided by a microchannel plate (MCP) 16. The MCP 16 receives the electrons produced by the photodetector 14 and produces an output signal comprising an increased number of electrons.

Typically, the image intensifier 10 also includes means for converting the intensified electrical signal to an optical signal. Usually, this comprises a phosphor device (typically serving as an anode), for example a layer of phosphorescent material deposited on an optically transmissive substrate, or window. By way of example, the intensifier 10 includes a fibre optic window 18 having an end or face 20 coated with a layer of phosphorescent material (not shown). Hence, the image intensifier 10 produces an intensified optical signal (via window 18) which is suitable for detection by, for example, a CCD camera.

Typically, in an image intensifier 10, the photodetector 14 serves as a cathode and so may be referred to as a photocathode. The phosphor device 20 is included in the corresponding anode of the intensifier 10.

The travel of electrons from the photodetector 14 through the intensifier 10 is achieved by creating suitable electrical fields within the intensifier 10. In the illustrated example, electrons are attracted to the MCP 16 by causing the MCP 16 to be less negatively biased than the photodetector 14. In turn, the converting component comprising the phosphor layer 20 is more positively biased than the MCP 16. In Figure 1, typical operating voltages are given by way of example only.

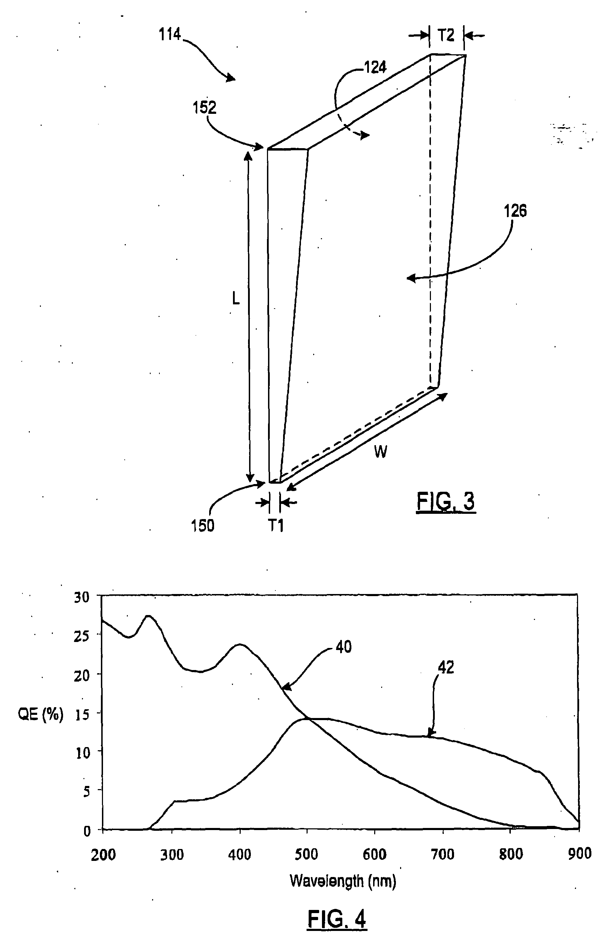

Figure 2 shows the window 12 and photodetector 14 in more detail. The photodetector 14 shown in Figure 2 is conventional in form and comprises a layer or substrate of photoelectric material, which may comprise a semiconductor material such as, for example, GaAs, InGaAs, or GaAsP, or a multi-alkali material such as, for example, Rubidium or Caesium. Industry standard S20 and S25 phootcathodes are examples of photodetectors that are of the same general type as the photodetector of preferred embodiments of the invention.

The photodetector 14, which may be referred to as a transmissive photodetector, has an obverse face 24, upon which photons are incident during use, and a reverse face 26 from which electrons are ejected during use. The thickness T of the photodetector, i.e. the dimension or depth of the photodetector 14 between its obverse and reverse faces 24, 26, is uniform or constant.

Photons (represented by arrows 30 in Figure 2) that are incident on the obverse face 24 are absorbed by the photodetector 14 whereupon electrons are produced. The depth (i.e. distance from the obverse face 24) at which a photon is absorbed is a function of the wavelength of the photon. Photons having a relatively low wavelength have a relatively high energy and tend to be absorbed relatively near the obverse face 24. Conversely, photons having a relatively high wavelength have a relatively low energy and tend to be absorbed relatively near the reverse face 26. The distance between the location at which an electron is created and the reverse face 26 has an affect on whether or not the electron actually reaches the reverse face 26 and is emitted therefrom - an electron that is created by the absorption of a photon adjacent the obverse face 24 is less likely to be emitted from the reverse face 26 than an electron that is created adjacent the reverse face 26. As a result, conventional photodetectors 14 are better suited to some wavelengths than others. The Quantum Efficiency (QE) of a photodetector is affected by the distance that an electron has to travel through the substrate before it reaches the reverse face 26. If this distance is relatively far, then some electrons may not reach the obverse face and so QE is adversely affected.

By way of example, consider an image intensifier that is required to operate on optical signals ranging from Ultra Violet (UV) radiation (approximately 200 nm in wavelength) to Infra Red (IR) radiation (approximately 900 nm in wavelength). UV photons have relatively low wavelength and are therefore absorbed near the obverse face 24. Photons of increasing wavelength are absorbed at a correspondingly increased distance from the obverse face 24. IR photons are therefore absorbed furthest from the obverse face 24. Therefore, if it is desired to provide a photodetector 14 that operates across the UV to IR range, then the photoelectric substrate of the photodetector 14 must be thick enough to allow IR photons to be absorbed. As a result, the photodetector 14 may be poor at emitting electrons corresponding to low wavelength photons, such as UV or blue photons.

This is illustrated in Figure 4 which plots the Quantum Efficiency (QE), that is the efficiency with which the photodetector emits electrons, against wavelength, In Figure 4, QE is expressed as a percentage and thus indicates the percentage of incident photons in respect of which a corresponding electron is emitted. A first plot 40 shows the QE of an industry standard photodetector known as an S20. A second plot 42 shows the QE of an industry standard photodetector known as an S25. The S20 is specifically designed to operate on optical signals at or near the UV end of the spectrum (sometimes referred to as UV enhanced). The S25 is specifically designed to operate on optical signals at or near the IR end of the spectrum (sometimes referred to as IR enhanced). Both the S20 and S25 photodetectors are of uniform thickness, but the S20 is thinner than the S25. It will be seen from Figure 4, that the S20 has a relatively high QE at low wavelengths (especially 200 - 400 nm), the QE becoming increasingly poorer with increasing wavelength. In contrast, the S25 has a relatively high QE at high wavelengths (especially 500 - 800 nm), and a poorer QE at lower wavelengths.

In arriving at the present invention, it is recognised that, in some applications, an optical signal incident on a photodetector may comprise components having different wavelengths, wherein each component is incident on the obverse face of the photodetector at a respective location. For example, an optical signal produced by an optical spectrograph comprises a plurality of signal components, or orders, each order comprising electromagnetic radiation in a respective frequency band. Moreover, the spectrograph separates the orders in one or more physical dimensions. For example, a Czerny Turner type spectrograph produces orders in a one dimensional manner or array. An Echelle type spectrograph (which uses an Echelle diffraction grating to create the orders) produces orders in a two dimensional array. Hence, each order is incident on the photodetector at a respective location or section.

Accordingly, one aspect of the invention provides a photodetector in which the thickness of the photoelectric material, or substrate, varies across the length and/or width of the photodetector, where the length and width are taken as mutually perpendicular dimensions that are both perpendicular to thickness (or depth). Hence, where radiation is incident upon an obverse face of the photodetector, the dimension or thickness of the photodetector in a direction generally perpendicular with the obverse face varies across the length and/or width of the obverse face.

Figure 3 shows one example of a photodetector 114 embodying the invention.
The photodetector 114, which may be incorporated into the image intensifier 10 in place of the photodetector 14, is generally similar to a conventional photodetector and has an obverse face 124 and a reverse face 126. However, in contrast to a conventional photodetector, the thickness of the photodetector 114, i.e. the distance between the obverse face 124 and the reverse face 126 as determined by the thickness of the layer of photoelectric material, is not uniform. At one end 150 of the photodetector 114, the thickness T1 is less than the thickness T2 at the opposite end 152. In the illustrated embodiment, the thickness of the photodetector 114 increases at a substantially constant rate from T1 to T2 along the length L of the photodetector 114. This results in a photodetector 114 that is tapered in transverse cross section, or generally wedge-shaped. For convenience, the thickness of the layer of photoelectric material may be measured in a first direction that is substantially perpendicular with the obverse face 124. In use, the photodetector may be orientated within an optical apparatus, such as a spectrometer, such that, during use, optical signals may impinge substantially normally (perpendicularly) upon the obverse face. In a preferred embodiment, the shape of the photodetector 114 in transverse cross section is substantially that of a truncated, right-sided, or right-angled, triangle, wherein the hypotenuse is, preferably, provided by the reverse face 126.

The photodetector 114 is particularly suited for use in an image intensifier associated with a Czerny Turner, Echelle, or other type of spectrograph. For example, the photodetector 114 may be positioned such that the incoming orders of relatively low wavelength (e.g. UV or blue orders) are incident on the obverse face 124 at or adjacent the thinner end 150, while the incoming orders of relatively high wavelength (e.g. IR or red orders) are incident on the obverse face 124 at or adjacent the thicker end 152. The intermediate orders are thus incident on the obverse face 124 at a respective location, or section, between the ends 150, 152, depending on how they have been separated by the spectrograph (or other instrument), As a result, the thickness of the photodetector 114 at each location along its length L generally matches, or is at least better suited to, the wavelength of the optical signals that are incident on the photodetector 114 at the respective locations in order that the QE of the photodetector 114 is improved, and preferably optimised, for the whole range of incident wavelengths. The preferred arrangement is such that photons from the respective orders are absorbed at or adjacent, or at least relatively close to, the reverse face 126 such that the resulting electrons do not have far to travel before they are emitted from the reverse face 126, Hence there is a relatively high probability that the resulting electron will be emitted from the photodetector 114.

It will be apparent from the foregoing that the thickness of the photodetector 114, or the thickness of the layer of photoelectric material, at a given region or section of the photodetector 114 is determined by, or dependent on, the wavelength of the optical signal that impinges upon said region or section during use. In particular, the thickness is determined by the absorption depth of the photodetector 114, i.e. the depth or distance from the obverse face 124 (for example measured perpendicularly from the obverse face 124, or parallel with the incident optical signal (which may or may not be the same direction))at which photons of a particular wavelength are absorbed by the photoelectric layer. As mentioned above, absorption depth varies with wavelength. Another influencing factor can be the probability of the electron that results from absorption from reaching the surface 126 and being emitted from the photodetector 114. The preferred thickness is that which maximizes QE. In preferred embodiments, the thickness for a given section or region is selected to be substantially equal to the absorption depth for photons that are incident at said region during use. The thickness is advantageously slightly greater than, i.e. greater than but substantially equal to, the absorption depth to ensure that the respective photons are absorbed. For example the thickness may preferably be up to 5% greater than the absorption depth. The thickness may alternatively be up to 10%, or up to 20%, or up to 30%, or up to 40%, or up to 50% greater than the absorption depth.

Typically, photodetectors are on the micrometer scale of thickness (e.g. up to 100 or up to 1000 micrometers). The optimum thickness for, say, red light, can be several times greater than, i.e. in the order of a whole multiple greater than, the thickness for, say, UV light and so variations in thickness arising as a result of the present invention are well above any non-uniformity resulting from manufacturing tolerances. Hence, for the photodetector 114, the thicker end 152 may be at least twice as thick as the thinner end 150, although depending on the application the discrepancy need not necessarily be so great. For example, the thicker end 152 may be at least 5%, or at least 10% or at least 50% thicker than the thin end 150.

Similar variations in thickness may be found in photodetectors embodying the invention that are not necessarily tapered as shown in Figure 3.

The photodetector 114 illustrated in Figure 3 may readily be used in both Czerny Turner type, and Echelle type apparatus, although would advantageously be employed in different orientations within each type of apparatus. For example, in a Czerny Turner type apparatus the photodetector 114 may be orientated such that the thinner end 150 is aligned with incoming orders of relatively low wavelength (e.g. UV or blue orders), while the thicker end 152 is aligned with incoming orders of relatively high wavelength (e.g. IR or red orders). However, for an Echelle type apparatus it is advantageous to rotate the photodetector 114 through approximately 90 degrees with respect to the previously described orientation because the Echelle apparatus arranges orders into a two dimensional array.

In alternative embodiments (not illustrated), the thickness need not necessarily change at a constant rate. For example, the thickness along the length L may change in a curved or non-linear, stepped or exponential manner. Further, the thickness of the photodetector may, alternatively or additionally, change along the width W of the photodetector. The change in thickness along the width may be at a substantially constant rate, or may be in a curved or non-linear, stepped or exponential manner. In such embodiments, the shape of the photodetector in transverse cross section may still be generally right-angled, or right sided, as shown in Figure 3, but the profile or edge of the reverse face may be curved (concave or convex) or stepped.

In general, the thickness of the photodetector varies across the length and/or width of the photodetector such that the thickness at a given location on the obverse face of the photodetector generally matches or is suited to (i.e. is sufficiently thick to allow electrons of a given wavelength to be absorbed in the layer of photoelectric material, while not significantly impeding the ejection of the resulting electrons) the wavelength of the incident radiation during use in order to improve, and preferably to optimise, the QE of the photodetector for incident radiation of different wavelengths.

Photodetectors embodying the first aspect of invention are suitable for use with image intensifiers, including the type shown in Figure 1, but are not limited to use with image intensifiers, For example, the photodetectors may be used in photomultiplier tubes (PMTs).

The invention is not limited to the embodiments described herein which may be modified without departing from the scope of the invention.

## Claims

1. A photodetector comprising a layer of photoelectric material having an obverse face, upon which photons are incident during use, and a reverse face, from which electrons emanate during use, wherein the thickness of the layer between the obverse face and the reverse face is non-uniform.

2. A photodetector as claimed in Claim 1, wherein said thickness, measured in a first direction, varies across the length of the photodetector, the length being substantially perpendicular with said first direction.

3. A photodetector as claimed in Claim 1 or 2, wherein said thickness, measured in a first direction, varies across the width of the photodetector, the width being substantially parallel with said first direction.

4. A photodetector as claimed in any preceding claim, wherein said thickness varies at a substantially constant rate.

5. A photodetector as claimed in any one of claims 1 to 3, wherein said thickness varies at a non-constant rate, for example a substantially exponential variation.

6. A photodetector as claimed in any preceding claim, wherein the respective thickness of a respective section of said layer corresponds with the wavelength of optical signals which, in use, are incident on said layer at said respective section.

7. A photodetector as claimed in any preceding claim, wherein the respective thickness of a respective section of said layer is such that at least some of the photons of optical signals which, in use, are incident on said layer at said respective section, are absorbed by said layer at or adjacent said reverse face.

8. A photodetector as claimed in any preceding claim, wherein the respective thickness of a respective section of said layer is substantially equal to, or greater than but substantially equal to, the absorption depth for photons incident at the respective section during use.

9. An image intensifier including a photodetector as claimed in any preceding claim.

10. An optical spectrometer including a photodetector as claimed in any one of Claims 1 to 8.
